Europäisches Patentamt

European Patent Office

Office européen des brevets

(11) Publication number: 0 383 206
A1

## (12) EUROPEAN PATENT APPLICATION

(21) Application number: 90102556.9

(51) Int. Cl.5: A21C 1/00

(22) Date of filing: 09.02.90

(30) Priority: 14.02.89 IT 1943289

(43) Date of publication of application:
22.08.90 Bulletin 90/34

(84) Designated Contracting States:
AT BE CH DE DK ES FR GB GR IT LI LU NL SE

(71) Applicant: FIRMA S.r.l.
Viale Tunisia, 30
I-20124 Milano(IT)

(72) Inventor: Borella, Guido
Corso Magenta 46
I-20121 Milano(IT)
Inventor: Nottolini, Alberto
Via Verdi 87
I-20070 San Rocco Al Porto(IT)
Inventor: Nughes, Francesco
Via Leopardi 22
I-20052 Monza(IT)

(74) Representative: Gervasi, Gemma et al
NOTARBARTOLO & GERVASI Srl Viale
Bianca Maria 33
I-20122 Milan(IT)

(54) Method and apparatus for forming doughs with starch compounds, for food use.

(57) A dough comprising starch compounds, which is formed in a mixer (11), is then processed in a manipulator (12) by undergoing remixing at reduced speed and at a substantially constant temperature for a predetermined time, in order to improve its gelling and dextrinization

FIG. 1

EP 0 383 206 A1

## 1. Field of the invention

This invention relates to a method and apparatus for the continuous automatic formation of starch doughs suitable for the industrial production of foods such as gnocchi, polenta etc.

## 2. prior art

Two methods are generally used in the industrial production of foods such as gnocchi and polenta.

The most ancient and widespread is to pour measured quantities of ingredients such as flour or powders mixture and water, into a planetary mixer heated by direct flame.

In this machine the ingredients are mixed and simultaneously heated gradually to a temperature of 80-90° C, at which gelling takes place with swelling of the starch present in the flours.

The dough is kept mixing at said temperature for the time required for the starch to completely gel.

After this the final product is prepared in a suitable shaping machine.

This method is very costly and also discretely critical because it has to be implemented and continuously controlled by an operator who is required to work under uncomfortable conditions in maintaining constant quality of the mix.

As an alternative an automatic method is available based on the use of a mixer which is fed with measured quantities of ingredients and continuously mixes these ingredients, heats the dough and extrudes it.

With this second method a certain gelling of the dough is obtained but with incomplete dextrinization of the starches.

This influences the softness, the taste and the cooking time of the final product.

In addition, imperfect gelling and insufficient dextrinization of the starches result in a phenomenon known as retrogradation, the effect of which is that the gel structure tends to collapse with the result that during cooking, the product does not properly absorb water and therefore remains hard and rubbery.

In this respect, the mixing action with simultaneous heating to improve the product pastiness is inadequate, because the protein molecules form a lattice alternating with a layer of starch molecules.

Because of the drawbacks of the second method many producers prefer the first, even though it is not continuous.

## 3. Summary of the invention

An object of the present invention is to provide a method and apparatus which enable starch doughs to be continuously formed with the characteristics obtainable by the traditional planetary mixer method.

A further object of the invention is to provide an automated method and apparatus which enable the desired operating parameters to be fixed and repetitively maintained.

These objects are attained by a method and apparatus for forming starch doughs, comprising an operation in which measured quantities of prechosen ingredients, of which at least one contains starch compounds, are mixed at a determined speed with simultaneous heating to a determined temperature, the method being characterised by comprising a subsequent operation of remixing said dough at a prechosen reduced mixing speed and at a substantially constant predetermined temperature, for a predetermined period of time.

By this means the starch doughs undergo complete gelling and the required level of dextrinization.

In addition the dough obtained is particularly soft and the final product retains this property with time.

## 4. Detailed description of the invention

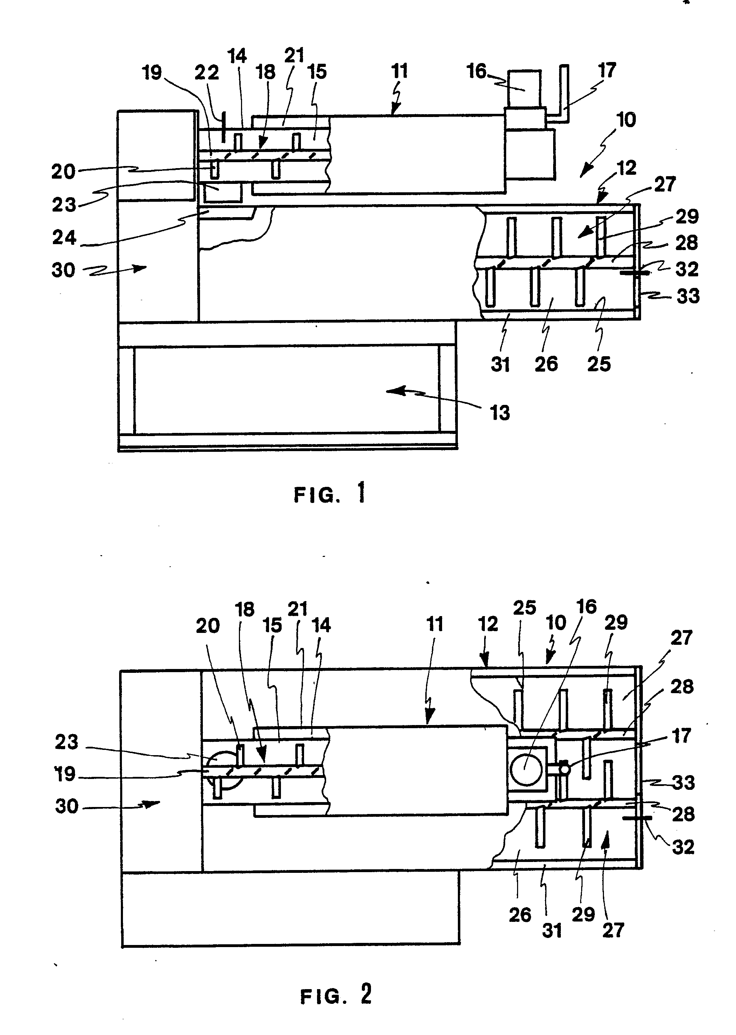

Characteristics and advantages of the invention will be now illustrated with reference to Figures 1 and 2, which show a non-limiting embodiment of the method and apparatus according to said invention.

Figure 1 is a partly sectional side view of an apparatus suitable for implementing the method of the invention;

Figure 2 is a partly sectional plan view of the apparatus of Figure 1.

In the Figures the reference numeral 10 indicates overall an apparatus comprising a mixer indicated overall by 11, and a manipulator indicated overall by 12.

The support structure of the apparatus 10 is indicated overall by

The mixer 11 comprises a casing 14 which encloses an internal chamber 15, to which feed devices 16 and 17 are connected to continuously feed metered quantities of, respectively, flour or powders mixture containing starch compounds, and water, which is preferably hot.

The devices 16 and 17 are shown schematically because they are of known type.

In the cylindrical casing 14 there is rotatably supported an impeller 18, the shaft 19 of which is provided with inclined radial blades 20 and is rotated by a motor via a transmission, these not being shown because they are of known type.

The rotation speed of the shaft 19 is fairly high, preferably 500 rpm., so that the blades can homogeneously disperse the flour or the powders in the water to form a starch dough free of lumps.

The casing 14 is surrounded by a jacket indicated by 21, through which there circulates a heating fluid (superheated water, steam, diathermic oil), the temperature of which is controlled by a temperature sensor 22 so that the dough is heated to a predetermined temperature, for example 85-90°C.

The reference numeral 23 indicates the exit mouth of the chamber 15, through which the starch dough is transferred into the entry opening 24 of the manipulator 12.

The cylindrical casing 25 of the manipulator 12 encloses an internal chamber 26 in which two impellers 27, clearly visible in Figure 2, rotate to further mix the starch dough.

The shaft 28 of each impeller 27, which is provided with radial blades 29 of adjustable inclination, is rotated at a speed of 3-8 r.p.m., and not more than 10 r.p.m., by a transmission having a variable ratio which can be chosen as required. The transmission, indicated by 30, and for example of the belt type, is not shown in detail because it is of known type.

The time for which the dough remains in the chamber 26 depends on the chosen rotation speed and the dimensions of the impeller 27.

A jacket 31 is disposed about the casing 25 and is traversed by a heating fluid, the temperature of which is controlled by a temperature sensor 32, for the purpose of keeping the dough in the chamber 26 at a predetermined temperature, for example about 80°C, but not more than 90°C.

The reference numeral 33 indicates an aperture from which the dough falls directly into a machine, not shown because of known type, for forming the final product, such as gnocchi, polenta etc.

In operation, the flour or the powders containing starch compounds are mixed with water in the mixer 11 with simultaneous gradual heating to a temperature of about 85°C to form a starch dough.

The dough leaving the mouth 23 is gel led to a good degree and is partially dextrinized.

The dough is then processed in the manipulator 12 with remixing at very low speed under constant temperature, for a time varying from 10 to 20 minutes and not more than 40 minutes, depending on the type of dough.

This operation results in complete gelling of the product and dextrinization of the starches to the required degree.

In addition, the delicate remixing action performed on the dough by the blades of the impellers 27 results in cross-linking of the protein and starch molecules, without damaging them.

The result is a particularly soft, plastic dough which is neither tacky nor rubbery, and such as to ensure that the final product, such as gnocchi or polenta, retains these characteristics with time.

Thus the same results as the traditional batch method are obtained by an automatic continuous process.

The manipulator 12 can also comprise only one impeller 27.

## Claims

1. A method for forming starch doughs for foods, comprising an operation in which measured quantities of prechosen ingredients, of which at least one contains starch compounds, are mixed at a determined speed with simultaneous beating to a determined temperature, the method being characterised by comprising a subsequent operation of remixing said dough at a prechosen reduced mixing speed and at a substantially constant predetermined temperature, for a predetermined period of time.

2. A method as claimed in claim 1, characterised in that said subsequent remixing operation is effected at a rotation speed of less than 10 r.p.m.

3. A method as claimed in claim 1, characterised in that said subsequent remixing operation is effected at a rotation speed of between 3 r.p.m. and 8 r.p.m.

4. A method as claimed in claim 1, characterised in that said subsequent remixing operation is effected at a temperature of less than 90°C.

5. A method as claimed in claim 1, characterised in that said subsequent remixing operation is effected at a temperature of about 80°C.

6. A method as claimed in claim 1, characterised in that said subsequent remixing operation is effected for a maximum time period of 40 minutes.

7. A method as claimed in claim 1, characterised in that said subsequent remixing operation is effected for a time period of between 10 minutes and 20 minutes.

8. An apparatus for forming starch doughs, comprising a mixer (11) able to mix measured quantities of prechosen ingredients, at least one of which contains starch compounds, at a determined speed with simultaneous heating to a determined temperature, said apparatus being characterised by also comprising, for the dough formed in said mixer (11), also manipulator (12) able to remix said dough at a prechosen reduced mixing speed and at a substantially constant predetermined temperature, for a predetermined period of time.

9. An apparatus as claimed in claim 8, characterised in that said manipulator (12) is formed of at least one impeller (27) rotating at a prechosen reduced speed and rotatably supported in a casing (25) surrounded by a heating jacket (31) maintained at a predetermined temperature.

10. An apparatus as claimed in claim 9, characterised in that said at least one impeller (27) is rotated by a transmission (30) of variable ratio which can be chosen at will.

11. An apparatus as claimed in claim 9, characterised in that said impeller (27) is rotated at a speed of less than 10 r.p.m.

12. An apparatus as claimed in claim 9, characterised in that said impeller (27) is rotated at a speed of between 3 r.p.m. and 8 r.p.m.

13. An apparatus as claimed in claim 9, characterised in that said heating jacket (31) is maintained at a temperature of less than 90°C.

14. An apparatus as claimed in claim 9, characterised in that said heating jacket (31) is maintained at a temperature of about 80°C.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 073 958 (ABE) <br> * Column 4, line 63 - column 5, line 15 * <br> --- | 1,8 | A 21 C 1/00 |
| A | GB-A-1 201 365 (SPILLERS) <br> * Claims; fig. * <br> --- | 1 | |
| A | US-A-3 251 695 (GIDLOW) <br> --- | | |
| A | US-A-3 332 368 (STICKELBER) <br> --- | | |
| A | DE-B-1 163 266 (BRAIBANTI) <br> --- | | |
| A | US-A-2 953 460 (BAKER) <br> ----- | | |

TECHNICAL FIELDS SEARCHED (Int. Cl.5)

A 21 C
A 23 L

The present search report has been drawn up for all claims

| Place of search | Date of completion of the search | Examiner |
|---|---|---|
| THE HAGUE | 25-05-1990 | PEETERS S. |